# EUROPEAN PATENT APPLICATION

(11) **EP 0 566 184 A2**
(43) Date of publication of application: **20.10.1993**
(21) Application number: 93200999.6
(22) Date of filing: 06.04.1993
(51) Int. Cl.: G06F 15/332

(54) **Picture transformer and television system with a transmitter and a receiver comprising a picture transformer**

(30) Priority: 13.04.1992 EP 92201042
(71) Applicant: Philips Electronics N.V., 5621 BA Eindhoven (NL)
(72) Inventor: Brüls, Wilhelmus Hendrikus Alfonsus, NL-5656 AA Eindhoven (NL); Brondijk, Robert Albertus, NL-5656 AA Eindhoven (NL)
(74) Representative: Kooiman, Josephus Johannes Antonius

(57) **Abstract**

A picture transformer for Discrete Cosine Transform of television pictures alternately transforms a row of pixels of a block and a column of product elements of a previous block. The rows and columns are applied in a parallel form and the transform is effected by means of fixed multipliers. This yields a low power dissipation, a compact realisation and a high processing rate.

## Description

The invention relates to a picture transformer for transforming a 2-dimensional block of input words into a 2-dimensional block of output words. The invention also relates to a television transmission system for television signals in which such a picture transformer is used and to the transmitter and the receiver of such a television transmission system.

It is generally known to subject a digital television signal to a 2-dimensional picture transform in order to reduce the bit rate. The television picture is split up into sub-pictures of N*N (frequently 8*8) pixels which are subsequently transformed into blocks of N*N coefficients. The bit rate reduction is achieved in that only the most important coefficients have to be transmitted. In the receiver the received coefficients are retransformed in blocks into the sub-pictures of N*N pixels. Generally the Discrete Cosine Transform (DCT) and its inverse form (iDCT) are used.

The 2-dimensional picture transform can be split up into two separate 1-dimensional transforms which are performed consecutively. In the case of transform (DCT) each row of pixels is converted in a first transform into what will be referred to as a row of product elements. The product elements which have been obtained row by row are subsequently subjected in columns to a second transform and converted into coefficients. In the case of inverse transform (iDCT) each column of coefficients is converted in a corresponding manner in a first transform into a column of product elements whereafter each row of product elements is converted into a row of pixels in a second transform. Generally, the transform of rows is referred to as "horizontal transform" and the transform of columns is referred to as "vertical transform". The operation of applying product elements in columns, which product elements have been generated in rows (DCT), and its inverse form (iDCT) is referred to as transposition. Only the transform (DCT) will as yet be considered hereinafter. However, these considerations also apply to the inverse transform (iDCT). It will further be assumed that the block size is 8*8.

A picture transformer of the type described in the opening paragraph is known from European Patent Application EP-A 0 424 119. This known picture transformer comprises a 1-dimensional transformer which first transforms all rows of pixels of a block and stores the series of product elements obtained therefrom in a transposition memory (horizontal transform). Subsequently, all transposed series of product elements of said block are applied to the same 1-dimensional transformer for computing the coefficients (vertical transform). The vertical transform cannot start until the horizontal transform has been performed completely, *i.e.* for all rows.

For the full 2-dimensional picture transform of a block of 8*8 pixels a time of 64 clock periods of the sample frequency at which the pixels are generated is available in real time applications. In the known picture transform the horizontal transform of the 8 rows of pixels necessarily takes place in half of these clock periods, hence 32 periods. The pixels should therefore be applied to the picture transformer at the double rate. In standard TV signals, in which a clock rate of approximately 20 MHz is conventional, this is unfavourable because chip surface and power dissipation are detrimentally influenced by high clock rates. This is a great drawback, notably for portable versions such as digital camera recorders. Moreover, the double clock rate considerably impedes the development of digital HDTV systems which are already based on very high clock rates.

It is an object of the invention to provide a picture transformer which meets the above-mentioned drawbacks. To this end the picture transformer is characterized in that it comprises a multiplexer for alternately selecting a series of input words of a block and a transposed series of product elements of a previous block and for applying said series to the 1-dimensional transformer. By performing the second transform on the basis of data of a previous block instead of the same block it is achieved that said second transform can be performed before the first transform of a block has been completed. It is therefore unnecessary to apply all pixels of a block at the double rate before starting the vertical transform.

A particularly favourable embodiment of the picture transformer is characterized in that it comprises means for applying the selected series in a parallel form to the 1-dimensional transformer. As soon as a row of pixels of a block is available in a parallel form, this row is horizontally transformed and a column of product elements is vertically transformed. During the time when these transforms are being performed, the application of the next row of pixels can be continued. This is effected at the normal sample frequency so that higher rates do not occur anywhere.

Each product element, each coefficient (DCT) and each pixel (iDCT) is constituted by a linear combination of 8 elements from the series applied to the 1-dimensional transformer. Various computing schemes are known from literature, in which the number of multiplications (theoretically 8 per product element, *i.e.* 64 per row) is reduced to an acceptable number, for example 16 per row. Such a computing scheme, also referred to as "DCT butterfly" indicates that (i) pixels are arranged in groups by means of adding and subtracting operations, (ii) the groups are subjected to multiplication operations and (iii) the multiplication results are combined by addition and subtraction. An attractive example of such a computing scheme is described, for example in European Patent Specification EP 0 286 183.

In a preferred embodiment the 1-dimensional transformer is of a type which, for the applied selected series, simultaneously computes a plurality of predetermined linear combinations of elements of this series. Such a simultaneous computation is many times faster than the successive computations which are used in practice and in which the pixels are successively grouped, stored and applied to a multiplier. This multiplier always receives a different multiplication factor ("butterfly coefficient"). The successive computation seems to have the advantage that the number of hardware-implemented multipliers is limited. Such a transformer has, however, many registers for storing interim results of additions and subtractions. Said registers require a large chip surface but also much power dissipation because the dissipation of a chip is mainly determined by the number of registers. Moreover, a fast multiplier also dissipates much power.

The multipliers for computing the linear combinations are preferably constituted by combinatory circuits which multiply an applied number by a predetermined fixed factor. For each fixed multiplication factor the corresponding multiplier can be optimized in such a way that it occupies a minimal chip surface. It has been found that the simultaneous computation of the product elements by means of said fixed multipliers is fast, yields a smaller chip surface and dissipates less power.

A further embodiment of the picture transformer is characterized in that it receives a motion signal which is indicative of motion in the received block, while two predetermined portions of a series are consecutively applied to the 1-dimensional transformer in response to a predetermined value of said motion signal.

These and other aspects of the invention will be apparent from and elucidated with reference to the embodiments described hereinafter. In the drawings
Fig. 1 shows diagrammatically a television system according to the invention.
Fig. 2 shows the functional structure of the picture transformer according to the invention.
Fig. 3 shows a 1-dimensional DCT transformer for use in the picture transformer shown in Fig. 2.
Figs. 4 and 6 show some signals occurring in the picture transformer of Fig. 2.
Fig. 5 shows a shuffle network for use in the picture transformer of Fig. 2.
Fig. 7 shows an embodiment of a picture transformer for performing inverse picture transform.
Fig. 8 shows some signals occurring in the picture transformer of Fig. 7.

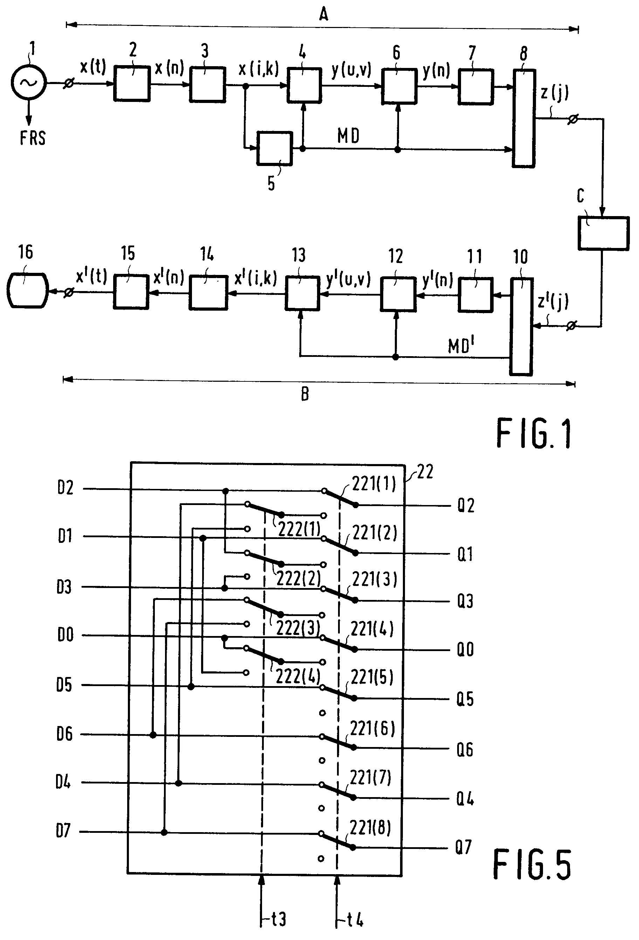

Fig. 1 shows diagrammatically a television system in which a picture transformer according to the invention is used. The television system comprises a coding circuit A and a decoding circuit B which are coupled together by means of a transmission channel C. The transmission channel may be a wireless or wired connection. However, it may alternatively be a magnetic or optical storage medium. The coding circuit A may form part of a television transmitter and the decoding circuit B may form part of a television receiver. In particular, the television system may be in the form of a video recorder or a camera recorder. In that case the coding circuit A and the decoding circuit B are both accommodated in one apparatus.

The coding circuit A receives a television picture signal x(t) from a picture signal source 1. In an A/D converter 2 the analog picture signal x(t) is sampled at a sample frequency fs and converted into 8-bit pixels x(n). These pixels are applied to a picture memory 3. The pixels are read from this picture memory in the form of blocks of, for example 8*8 pixels x(i,k) and applied to a first picture transformer 4 and to a motion detector 5. The motion detector 5 is known *per se* and may be implemented in a way as described in European Patent Application EP-A 0 282 135. It generates a motion signal MD if motion has been detected within the block of 8*8 pixels. It will hereinafter be assumed that picture transformer 4 is adapted to perform a Discrete Cosine Transform (DCT). For each presented block of pixels the transformer generates a block of 8*8 coefficients y(u,v). An embodiment of this picture transformer will be described in detail. In this respect it is to be noted that the picture transformer may operate in a motion-adaptive way. To this end the picture transformer receives the motion signal MD. The block of coefficients y(u,v) of the picture transformer 4 is subsequently applied to a scanner 6 which also receives the motion signal MD. The scanner supplies for each block a serial sequence of coefficients y(n) to a variable-length coder 7. The scanner 6 and the variable-length coder 7 are known *per se.* The variable-length coder 7 codes each series of coefficients y(n) into code series of variable lengths which comprise a considerably smaller number of bits than the corresponding block of 8*8 coefficients y(u,v). The code series and the motion signal MD are transmitted in time-division multiplex format in the form of a pulse series z(j) by means of a multiplexer 8.

The inverse operations are carried out in the decoding circuit B. In a demultiplexer 10 the code series and the motion signal MD' are regained from the received pulse series z'(j). The code series are applied to a variable-length decoder 11 for reconstructing the serial sequences of coefficients y'(n). A block-formation circuit 12 receives the serial sequences as well as the motion signal MD' and forms the blocks of 8*8 coefficients y'(i,k) therefrom. The coefficients are applied to a second picture transformer 13. This transformer performs the inverse Discrete Cosine Transform (iDCT) so that each block of coefficients is retransformed into a block of 8*8 pixels x'(i,k). The blocks of pixels thus obtained are stored in a picture memory 14. The pixels in the picture memory jointly constitute a complete picture which is converted by means of a D/A converter 15 into an analog picture signal x'(t) for display on a display screen 16.

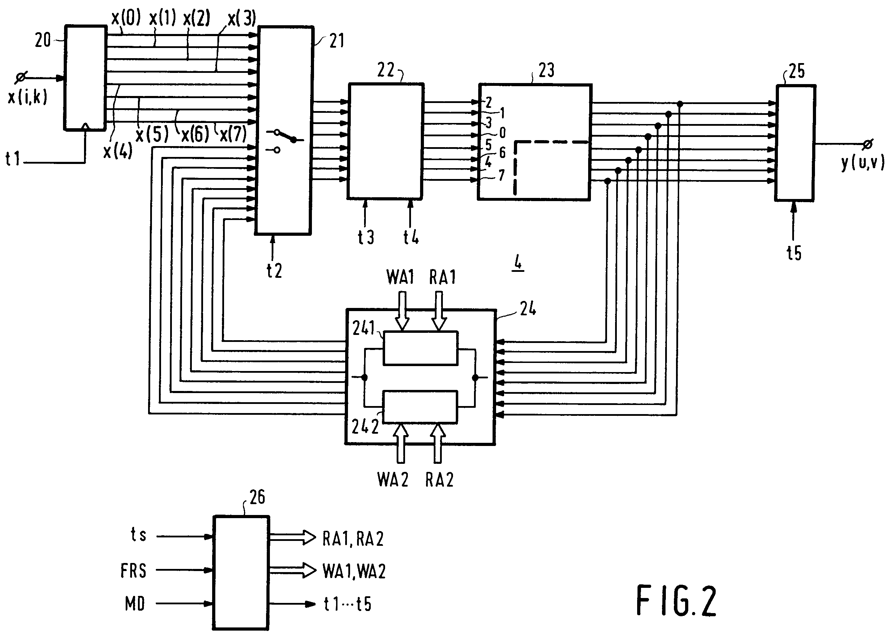

Fig. 2 shows an embodiment of the picture transformer 4 which forms part of the coding circuit A. As will be described, the picture transformer 13 in the decoding circuit B has a similar structure. The operation of the picture transformer 4 will now be described for the case where there is no motion (MD = 0) in the presented block of 8*8 pixels.

The pixels x(i,k) of a block are presented row by row and applied to a series-parallel converter 20. The series-parallel converter receives control signals t1 from a control circuit 26. The control signals are chosen in such a way that the 8 pixels x(i,0) .... x(i,7) of a row i are simultaneously available. The row of pixels is applied in a parallel form to a first input of a multiplexer 21. As will be described later, a second input of this multiplexer receives a column of 8 product elements, also in a parallel form, from a transposition memory 24. In response to a selection signal t2 the selector either applies the row of pixels or the column of product elements to a shuffle network 22. In the relevant case (no motion) it may be assumed that the inputs and outputs of this network are directly interconnected. The series of elements selected by the multiplexer 21*, i.e.* the row of pixels or the column of product elements is applied to a 1-dimensional transformer 24.

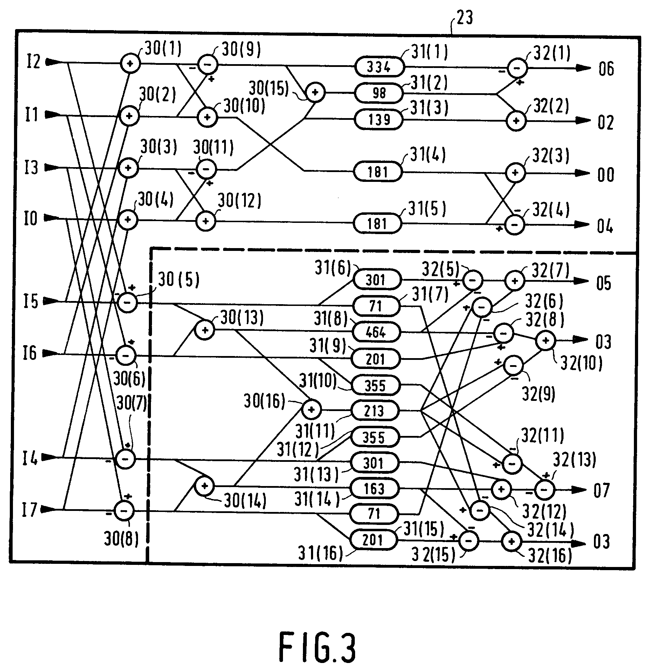

Fig. 3 shows an embodiment of the 1-dimensional transformer for the case where it is adapted to perform a Discrete Cosine Transform (DCT). It comprises a plurality of adders and subtracters 30(i) which combine the 8 elements I0 ... I7 of an applied series in a predetermined manner. Combinations of the elements I thus formed are applied to multipliers 31(i) which multiply the applied number by a fixed predetermined factor. In the Figure this factor is indicated for each multiplier. The product values obtained are grouped in further adders and subtracters 32(i) in order to form 8 output elements O0 ... O7. Each output element has a value which is a linear combination of all input values. For an extensive functional description of the 1-dimensional transformer reference is made to the previously mentioned European Patent Specification EP 0 286 183. It should be noted that the inputs and the outputs are not shown in numerical order.

Reverting to Fig. 2 it appears that the output elements O(0) ... O(7) of the 1-dimensional transformer 23 are applied to a transposition memory 24 and to a parallel-series converter 25. The parallel-series converter 25 receives control signals t5 so as to convert the simultaneously presented output elements into a serial format at the sample frequency fs. The transposition memory 24 comprises a first memory 241 and a second memory 242 and receives write addresses WA1 and WA2, respectively, so as to store the output elements. Moreover, the transposition memory receives read addresses RA1 and RA2, respectively, so as to apply previously stored output elements to the second input of the multiplexer 21. The various control signals, write addresses and read addresses are generated by the control circuit 26. To this end, this circuit receives the sample frequency fs, the motion signal MD and a frame reset pulse FRS. The frame reset pulse is received from the picture signal source 1 (see Fig. 1).

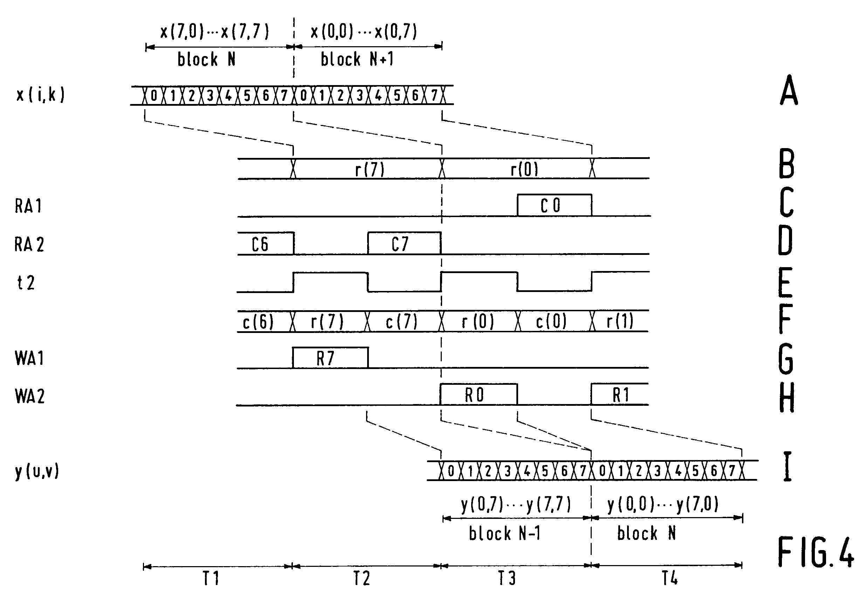

Fig. 4 shows, in the form of a time diagram, various signals which occur in the picture transformer 4. The successive pixels x(i,k) of a row i of a presented block of pixels are indicated under A. More particularly, the Figure shows under A successively the last row of pixels x(7,0) ... x(7,7) of a block N (during a period of time T1) and the first row of pixels x(0,0) ... x(0,7) of the subsequent block N+1 (during a period of time T2). The output signal of the series-parallel converter 20 is indicated under B. It has been attempted to indicate by means of r(7) and r(0) that, successively, the pixels of row 7 of block N (during T2) and the pixels of row 0 of block N+1 (during T3) are available in a parallel form at the first input of the multiplexer 21. The control signal t2 which is applied to this multiplexer is indicated under E.

The following occurs in the period of time T2. During the first half of T2 the multiplexer selects the row of pixels r(7) and applies this row to the transformer 23. The Figure indicates under F that the (horizontal) transform of this row r(7) is effected during this period of time. Simultaneously, the write address WA1 for addressing a row of this memory is applied to the first memory 241. The Figure indicates under G that the write address has the value R7, which means that the result of the horizontal transform is stored in row 7 of the first memory 241. During the second half of the period T2 a read address RA2 is applied to the second memory 242, which means that said second memory supplies a series of previously stored elements. The Figure indicates under D that the read address has the value C7, which means that column 7 of the memory is addressed. This column is available at the input of the transformer 23 *via* the multiplexer 21. During the second half of the period of time T2 the column is transformed. At the end of the period the transformed column is clocked in the parallel-series converter 25. As is shown under I in the Figure, the result is serially available in the form of coefficients y(0,7) ... y(7,7) during a subsequent period of time T3. For the sake of completeness it is to be noted that these are still coefficients which are associated with a previous block N-1.

In the example described, all rows of pixels of block N have now been transformed and their results are stored in the first memory 241. The following occurs in the period of time T3. During the first half of T3 the multiplexer again first selects a row of the series-parallel converter and applies this row to the transformer 23. This is row r(0) of block N+1. The results of the transform are now stored in the second memory 242. To this end, this memory is addressed by means of the write address WA2. The Figure indicates under H that the write address has the value R0, which means that the result of the horizontal transform is stored in line 0 of the second memory 242. During the second half of the period T3 the read address RA1 is applied to the first memory 241, so that again a series of previously stored elements is read. The Figure shows under C that the read address RA1 has the value C0, which means that column 0 of this memory is addressed. This column is available at the input of the transformer 23 *via* the multiplexer 21. During the second half of period of time T3 the column is transformed. The coefficients thereby obtained are delivered via the parallel-series converter 25 during a subsequent period T4. As is indicated under I in the Figure, these are the coefficients y(0,0) ... y(7,0) which are associated with block N.

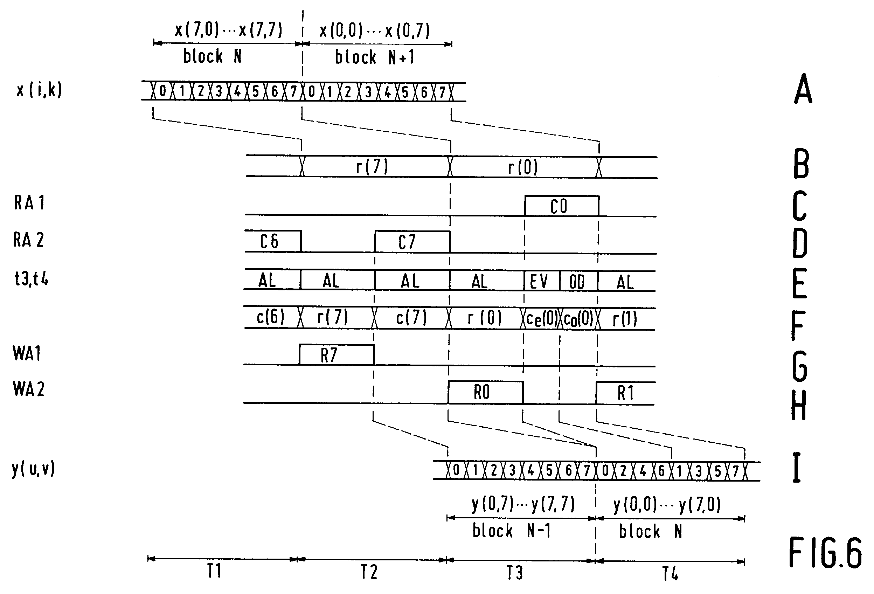

The operation of the picture transformer will now be explained for the case where motion has been detected in a presented block of 8*8 pixels (MD = 1). However, before describing this operation, the shuffle network 22 shown in Fig. 2 will be described in detail. Fig. 5 shows the structure of this shuffle network in a functional way. It comprises a first series of switches 221(i) controlled by a control signal t4. In the shown position of these switches, all inputs D0-D7 are directly interconnected to the corresponding outputs Q0-Q7. In the position not shown the outputs Q4-Q7 are decoupled or they may receive the fixed value 0. However, the outputs Q0-Q3 are either connected to the even inputs D0, D2, D4, D6 or to the odd inputs D1, D3, D5, D7 of a presented series of elements. The selection of even or odd inputs is effected in response to a control signal t3 which operates a plurality of further switches 222(i). The control signals t3 and t4 are generated by the control circuit 26 (see Fig. 2). The control signals are such that (i) presented rows are directly passed on, (ii) presented columns are directly passed on if MD = 0 and (iii) the even and odd elements of presented columns are successively passed on if MD = 1. It should be noted that the inputs and outputs of the shuffle network in Fig. 5 have been enumerated in the same order as the inputs and outputs of the transformer 23.

Fig. 6 shows, again the form of a time diagram, the various signals which occur in the picture transformer if motion has been detected in block N. This Figure indicates under E whether the shuffle network has passed on all elements (AL), the even elements (EV) or the odd elements (OD) of an applied series. During the horizontal transform of block N (first half of the periods of time T) and during the vertical transform of the previous block N-1 (second half of the periods of time up to and including T2) there is no difference with the previously described example. However, during the vertical transform of block N (second half of the periods of time from T3) the shuffle network successively applies the even and odd elements of a presented column to the transformer. More particularly, the Figure indicates under F that the even part cₑ(0) and the odd part cₒ(0) of the first column c(0) of block N are successively transformed during the second half of period of time T3.

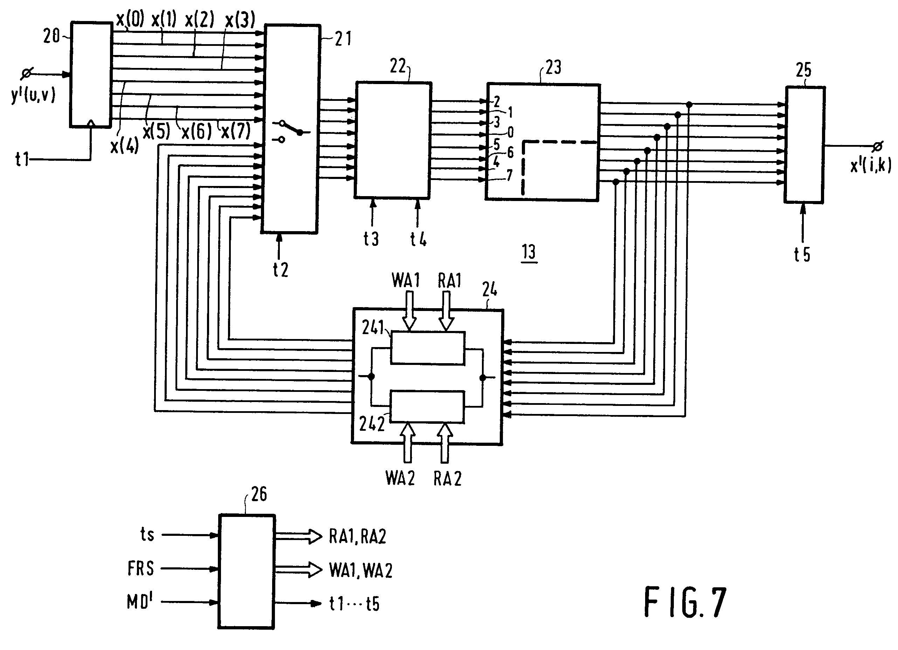

Fig. 7 shows an embodiment of the picture transformer 13 (see Fig. 1) for performing the inverse Discrete Cosine Transform (iDCT). As is apparent from the Figure, the functional structure of this inverse picture transformer corresponds to that of picture transformer 4 which has already been described. Consequently, the various elements have the same reference numerals. The inverse picture transformer is mainly different in that the 1- dimensional transformer 23 is now implemented for inverse transform. An embodiment of this transformer is not shown, but can be found, for example in the previously mentioned European Patent Specification EP 0 286 183. As will now be described, the control circuit 26 further supplies the various control signals, write addresses and read addresses in a different sequence.

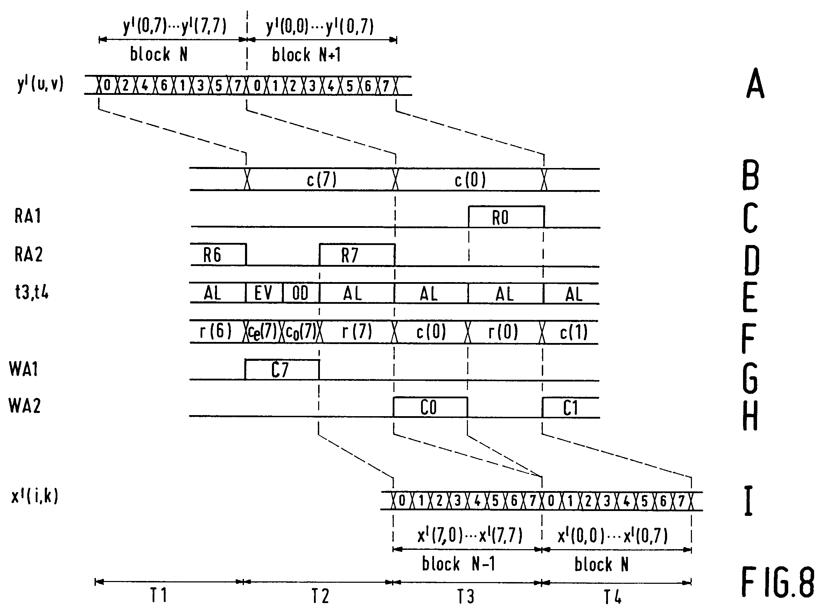

In the inverse transform the (vertical) transform of columns and subsequently the (horizontal) transform of rows is realised. Fig. 8 shows, again in the form of a time diagram, various signals which occur in the picture transformer 13. The Figure indicates under A that the picture transformer successively receives the last column of coefficients y'(0,7) ... y'(7,7) of block N and the first column of coefficients y'(0,0) ... y'(0,7) of block N+1. The Figure indicates under B that these columns are available in a parallel form during periods of time T2 and T3, respectively. The multiplexer alternately selects a column (of the series-parallel converter 20) and a row (of the transposition memory 24).

In the example shown in Fig. 8 it is assumed that there is motion in block N. The Figure shows under E that the shuffle network 22 first applies the even elements (EV) and subsequently the odd elements (OD) of each received column of block N to the transformer 23. The transform results thereof are stored in the form of columns in the first memory 241. More particularly, the last column c(7) of block N is transformed during the first half of period of time T2. As is indicated under G, a write address WA1 of the value C7 is applied to the first memory during this transform, which means that the result is stored in column 7 of this memory. During the second half of the period T2, a read address RA2 of the value R7 is applied to the second memory 242, as is indicated under G. This means that the last row r(7) of the previous block N-1 is read and transformed. At the end of the period T2 the transformed row is clocked in parallel-series converter 25. As is indicated under I in the Figure, the result thereof is serially available in the form of pixels x'(7,0) ... y(7,7). For the sake of completeness it is to be noted that these are still pixels which are associated with a previous block N-1.

In a corresponding manner, the columns of the next presented block N+1 and the rows of the block N stored in the first memory are subsequently processed in period of time T3. It has been assumed in Fig. 8 that there is no motion in block N+1 so that the presented columns are transformed completely.

## Claims

1. A picture transformer for transforming a 2-dimensional block of input words into a 2-dimensional block of output words, comprising:
a 1-dimensional transformer for transforming a series of input words constituted by a row or a column of a block into a series of product elements of said block, and for transforming a transposed series of product elements into the series of output words;
a transposition memory for transposing the series of product elements;
characterized in that the picture transformer comprises a multiplexer for alternately selecting a series of input words of a block and a transposed series of product elements of a previous block and for applying said series to the 1-dimensional transformer.

2. A picture transformer as claimed in Claim 1, characterized in that it comprises means for applying the selected series in a parallel form to the 1-dimensional transformer.

3. A picture transformer as claimed in Claim 2, characterized in that the 1-dimensional transformer is of a type which, for the applied selected series, simultaneously computes a plurality of predetermined linear combinations of elements of said series.

4. A picture transformer as claimed in Claim 3, characterized in that the multipliers for computing the linear combinations are constituted by combinatory circuits which multiply an applied number by a predetermined fixed factor.

5. A picture transformer as claimed in any one of the preceding Claims, characterized in that it further receives a motion signal which is indicative of motion in the received block, while two predetermined portions of a series are consecutively applied to the 1-dimensional transformer in response to a predetermined value of said motion signal.

6. A coding station for coding television signals, comprising a picture transformer as claimed in any one of the preceding Claims.

7. A decoding station for decoding digital television signals, comprising a picture transformer as claimed in any one of the preceding Claims.
